# EUROPEAN PATENT APPLICATION

(11) **EP 0 632 988 A1**
(43) Date of publication of application: **11.01.1995**
(21) Application number: 93201965.6
(22) Date of filing: 06.07.1993
(51) Int. Cl.: A47J 37/10, A47J 27/62

(54) **Thermostatic fry pan with bottom sensor**

(71) Applicant: Hu, Lungchiang, Taichung (TW)
(72) Inventor: Hu, Lungchiang, Taichung (TW)
(74) Representative: Fieret, Johannes, Ir.

(57) **Abstract**

This invention is a thermostatic fry pan, its sensor being located at the bottom of the pan. A concordant sensory coil (20) or heat producing body is attached to the bottom of the pan with allowance made for attachment of a sensor (30). Maintenance of tight attachment of the sensor (30) is insured by a spring piece (40) and reinforced by an electric follow-up sensor, hence attaining the best thermo-sensory, thermostatic and safety effects.

## Description

### BACKGROUND OF THE INVENTION

This invention is about a type of thermostatic fry-pan with an in-built thermo-sensory structure, hence its name the botton thermo-sensory thermostatic fry-pan.

The goal of this invention is in improving on the follwoing defects usually found in a thermostatic fry-pan:
1. When the food is heated up rapidly, those at the bottom tends to be overheated and as a result, get burnt. 2. When using a fry-pan made for an electro-magnetic stove, the thermo-sensory mechanism in the pan is usually too slow to keep up with the all too rapid temperature rise in the mega powered electro magnetic stove. 3. The thermo-sensory mechanism in the usual thermostatic fry pan is still far from perfect and may cause the cook unnecessary troubles with temperature control, thus, enhancing the element of risk.

### SUMMARY OF THIS INVENTION

The purpose of this invention is to provide a "Thermostatic fry pan with bottom sensor", allowing the thermal sensory to come into direct contact with the bottom of the pan, hereby attaining the best effect in thermal sensory plus highest effeciency in thermal feed-back control.

Another purpose of this invention is in providing a "Thermostatic fry pan with bottom sensor" especially adapted for use on a high efficiency electro-magnetic fry pan, allowing precise thermal control.

One other goal of this invention is in achieving precise thermal control plus safety precaution through the thermo-sensory resistence built up from a electronic feed back circuit.

This invention comprises mainly of a concordant sensory coil or heat producer at the bottom of the pan, with allowance made for a sensor. Maintenance of tight attachment of the sensor is ensured by a spring piece and reinforced by an electric follow-up sensor, hence attaining the best thermo-sensory, thermostatic and safety effects.

A secondary characteristic of this invention is that its thermal sensor is a heat sensitive resistance or some other heat sensory mechanism. Pecision in temperature control is achieved by a feed back controlled thermo-sensory resistance operated via a electronic circuit. The electric circuit comprises a constant voltage transistor and heat sensitive resistance a differential voltage circuit made up of variable resistance; hence motivating the continuous power, the electric resonance inducer or heat producing electric current in that order.

Below are examples and illustrations to demonstrate the technique and methods involved plus the functions of the instrument. This will aid in the comprehension of above mentioned goal, structures and characteristics.

Illustration 1 shows the set up of this invention.

Illustration 2 shows the partial characteristic of this invention.

Illustration 3 shows the electric circuit of this invention.

Illustration 4 (a) shows part one of the detachment of pan body from the copper board.

Illustration 4 (b) shows the part two of the detachment of pan body from the copper board.

### DETAILED DESCRIPTION OF THIS INVENTION

Please refer to illustration 1, 2. This invention of a "Thermostatic fry pan with bottom sensor",its characteristics being as shown on the illustration.The pan body (10) consists of concordant sensory coil or heat producer (20) at the bottom with allowance made for attachment of a sensor (30). Maintenance of of fight attachment of the sensor (30) is ensured by a spring piece (40) and reinforced by an electric follow up sensor (50), hence attaining the best thermo-sensory, thermostatic and safety effect.

As shown in illustration (2), this thermal sensor (30) is a heat sensitive resistance or some other heat sensor. It is located within a hole (32) on a copper base (31); the top of the copper board being in magnified, contract with the bottom surface of the pan, hence making the use of heat agent redundant. A heat resistant insulator (33) e.g. magnesium oxide, silica, enamel, teflon etc, is introducced in the space between the heat sensitive rod-like resistance thermo-sensor (30) and the hole (32), allowing for absolute insulation.

An elastic piece (40) is attached to the bottom of the copper base (31), holding it tight. This elastic piece is in fact a spring (40) attached on the other end to a fixed stand (36) which contains a space within; the holding property of the spring nullified the expansion of the sensor upon heating, hence avoiding an error in thermal conductive sensor. Also, one end of the thermal sensor (30) is attached to a heat resistant wire (301) itself connected to a electric circuit (50). Precise thermal control is achieved via an electric feed-back controlled thermal sensor (30).

This thermal sensor (30) continues below as a contact arm (302) which is in furn attached to a fixed stand (36) containing an internal micro switch (60). This micro switch is in series with the electric switch (not shown), allowing for relative co-ordination upon operation.

Please refer to illustration 3, this is the set-up of an electric circuit (50). This circuit comprises a constant voltage transistor TR and a heat sensitive resistant R2, a variable resistant VR1 a differential voltage circuit made up of R1, hence motivating the continuous circuit, the electric resonance inducer or heat producing electric current PW in that order.

The above descriptions should have helped you understand the goal, characteristics and function of this invention. Below is the description of usuage and operative concept of this invention.

When in use, the pan body being in structural concordance with the sensory coil, would also fit with the support structure for the pan body (10), hence allowing the the thermal sensor (30) to come into direct contact with the bottom of the pan body (10). An accurate thermal sensor and precise thermal feed back is hence achieved.

The concept of locomotion, R1 and VR1 result in a differential pressure TR which in turn give rise to a base pole B providing the positive current. R3, upon providing ZD with a current, a relay RLpole results in TR from the two ends of constant voltage in ZD When the heat sensitive resistant R2 changes with the variation in temperature, the base pole (B) from R1 and VR would control relay RL's contact point On, Off. For example, the bipolar current (V2) comprises of 6 VDC, and when the temperature is insufficient, the resistance is higher in the heat sensitive resistor R2, resulting in a voltage of 6VDC and above on the crystal TR at the base pole. Hence the crystal TR conduct in forwarding ,the relay RL attracts,electric resonance inducer or heat producer PW go into motion. At this point, the pan body (10) with the sensory coil at the bottom or heat producer (20) begins a maximal increase in temperature. On the contrary, when temperature reaches a maximal set point (adjusted by VR1), transistor TR becomes insulative, the continuous electricity RL,the electric resonance inducer or the electric heat producer cease to heat up respectively. Either by repetition or by an absolute ON/OFF method of electric control, or by the method of current cessation, the current in the base pole (B) of transistor is stabilised. This is to say that resistance value (R2) and temperature control is stabilised.

Please refer to illustration 4A, the pan body(10) and its base (31) is seperately illustrated; this being one of the characteristics of this invention. A spring is attached below the copper base (31),designed to adapt to the different pan body used by the cook when cooking, so that good thermal sensation is obtained even though there is a change in pressure on the spring .

Please refer to illustration 4B, the pan body (10) is seperately illustrated from the copper base (31) in the second illustration. Its characteristic being that the sensory coil (20) is seperately attached to a support structure so as to make the periodic cleaning of pan bottom more convenient.

Now to demonstrate another characteristic of this invention which is the principal behined the motivation of the contact arm (302) of the thermal sensor (30) and its micro-switch (60). When the pan body is in touch with the thermal sensor, inclined at a certain angle, the weight from the pan causes the electric current to flow by switching on the micro-switch via the contact arm (302), hence putting the thermostation into maximal use. Also, it is safe and it prevents wastage of electricity hence lowering of efficiency that would result from improper inclination of the pan body. it also reduces the risk of a load-free electric appliance to the minimal, making this invention almost ideal.

In summary, this thermostratic fry pan with bottom sensor, provides the best thermal sensory effect, highest feed-back control efficiency. It not only has never been in the market, it is also innovative and practical,fulfilling the requirements of new patent application, hence it should be protected by the patent law. We hereby submit an application in hope that it will be approved soon.

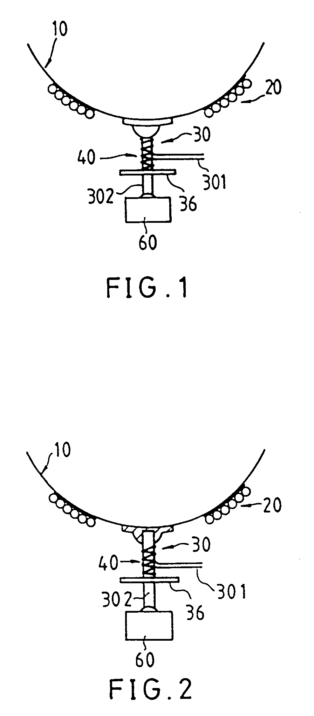

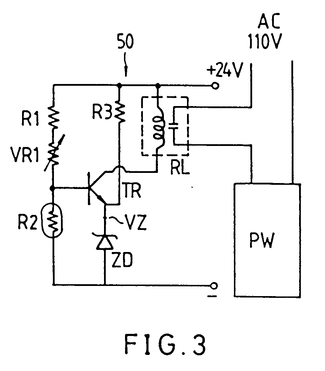

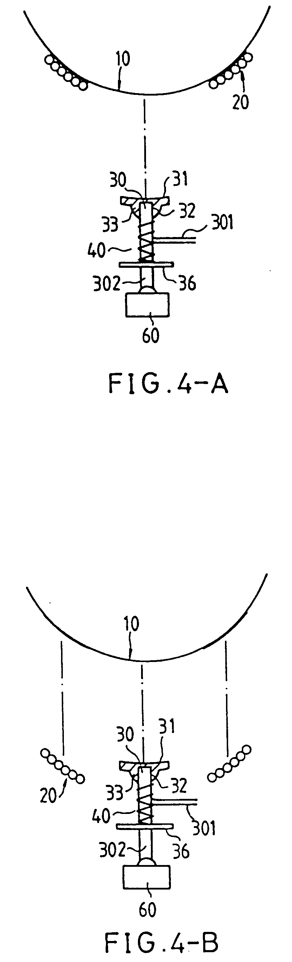

## Claims

1. A thermostatic fry pan with bottom sensor that it consists of a concordant sensory coil or heat producer at the bottom of the pan, with allowance make for a thermal sensor and is attached via a spring-piece, and then, on top of that,the thermal sensor is also connected to an electric feedback circuit, attaining the best thermal sensory effect, precise control of temperature and safety measures.

2. According to No. (1), precision in temperature control is attained via a electric feedback on the resistance of the thermal-sensor.

3. According to No (1) or (2), the thermal-sensor is a heat sensitive resistor or other heat sensor.

4. According to No (1), the electric circuit comprises a constant voltage transistor and heat sensitive resistor, variable resistor making up a differential circuit, hence motivating the continuous electricity, electric resonance inducer or electric heat producer.

5. According to No (1) there is a contact arm on the thermal sensor connected to a angle of micro-switch, hence current is only switched on at a certain inclination of the pan, attaining precision in thermal control and good safety measures.
